# EUROPEAN PATENT APPLICATION

(11) **EP 1 227 646 A1**
(43) Date of publication of application: **31.07.2002**
(21) Application number: 01200259.8
(22) Date of filing: 24.01.2001
(51) Int. Cl.: H04M 3/533, H04L 12/58

(54) **Service platform and a telecommunication system, a method and use thereof**

(71) Applicant: Realtime A/S, 1560 Copenhagen V (DK)
(72) Inventor: Beckmann, Jacob Halberg, 2100 Copenhagen 0 (DK); Svensson, Martin, 2100 Copenhagen 0 (DK)
(74) Representative: Elmeros, Claus

(57) **Abstract**

The invention relates to a service platform (SP) for operation in telecommunication networks, said service platform (SP) comprising at least one computer structure (6) having an associated general format (GF), said computer structure (6) comprising gateway interface means (5a, 5b, 5c) adapted for communicating with at least two communication networks (2a, 2b, 2c) via operator gateways (OGW1, OGW2, OGW3), each operator gateway (OGW1, OGW2, OGW3) having associated operator gateway formats (OGWF1, OGWF2, ... OGWFn), at least two of said operator gateway formats (OGW1, OGW2, OGW3) being mutually different, where said service platform (SP) comprising transformation means (TM; TM1, TM2, TM3) is adapted for transforming said operator gateway formats (OGWF1, OGWF2, ... OGWFn) into said general format (GF) and/or for transforming said general format (GF) into said operator gateway formats (OGWF1, OGWF2, ... OGWFn), and thereby facilitate communication between operator gateways and service platform gateways.

The invention further relates to a telecommunication system, methods and use thereof.

## Description

### Background of the invention

The present invention relates to a service platform and a telecommunication system. It further relates to methods and use thereof.

A telecommunication system is usually based on a cellular radio communication network, such as the Global System for Mobile Communication (GSM). In the future, cellular radio communication networks based on other principles will emerge, e.g. Universal Mobile Telecommunications System (UMTS). Besides the possibility of receiving and transmitting conversation, the networks further offer the possibility of receiving and transmitting data communication from mobile telephones.

The message service such as short message service (SMS) is a data communication feature, which is incorporated into digital mobile communication networks and mobile telephones. The message service allows a short message to be sent from a mobile telephone to a message service centre. From the service centre, it is possible to transmit the message to other communication devices capable of receiving messages, such as other mobile telephones, computers connected to the Internet etc. The centre also works as storage means for the message until the receiver is ready to receive it. The storage means can be necessary when the telephone is turned off or is out of network boundaries. When the telephone is ready, the message will be forwarded. Apart from receiving, transmitting and storing messages, the centre is also capable of acting as gateway to other application servers delivering different kinds of services for users of the message service system.

Among these services for users of the mobile telephones are the possibilities of requesting information services on the Internet. For instance, if the user wants to know his horoscope for the day for people born in the star sign Aquarius, it is possible to transmit an SMS message to the message service centre requesting this service. The centre will know upon receipt of the message which Internet page to collect and transmit the text on it to the user as an SMS message.

Another known service offers the user of a mobile telephone the possibility of communicating with the user's bank by using SMS messages and for instance receive information on the amount of money on a bank account.

Similar services may use other types of data communication than the SMS service e.g. WAP and I mode communication.

These services and many others offer aid and knowledge of any kind to users at any location when the user uses his or her mobile telephone.

However, the known systems suffer from different problems which limit the use of the systems. A problem is the lack of co-ordination between the systems and standards of the service providers and communication networks providers. This generally means that the service providers can only provide services to a limited number of users having the right equipment and/or the right communication network provider.

It is also a problem that the lack of co-ordination between the systems of the service providers prevents co-operation and hereby the possibility of supplying a large variety of services to the users.

The purpose of the invention is to create a service platform which does not suffer from the drawbacks of the known systems.

It is also an object of the invention to create a platform that may be adapted to any kind of system, standard and to other service providers in an easy and flexible manner.

### The invention

Claim 1 describes a service platform (SP) for operation in telecommunication networks, said service platform (SP) comprising at least one computer structure (6) having an associated general format (GF), said computer structure (6) comprising gateway interface means (5a, 5b, 5c) adapted for communicating with at least two communication networks (2a, 2b, 2c) via operator gateways (OGW1, OGW2, OGW3), each operator gateway (OGW1, OGW2, OGW3) having associated operator gateway formats (OGWF1, OGWF2, ... OGWFn), at least two of said operator gateway formats (OGW1, OGW2, OGW3) being mutually different, said service platform (SP) further comprising transformation means (TM; TM1, TM2, TM3) adapted for transforming said operator gateway formats (OGWF1, OGWF2, ... OGWFn) into said general format (GF) and/or for transforming said general format (GF) into said operator gateway formats (OGWF1, OGWF2, ... OGWFn), and thereby facilitate communication between operator gateways and service platform gateways.

Hereby, it is possible to communicate with a number of different types of communication systems with a minimum of effort, especially for the operators of the communication networks.

It is also possible to communicate with several communication systems of the same type but with different equipment from different suppliers using the same data language.

On the computer server platform, internal communication takes place in the same language and creates a system which is not affected by changes in the external communication network technology or by the emergence of new communication technologies i.e. a change from GSM to UMTS networks.

At the same time, the providers of communication networks do not have to invest in new equipment to communicate with the server platform if they alter the network technology.

It should be emphasised that the term "transforming" also may include a one-to-one transformation.

The term "format" is to be understood as a preestablished form, structure or layout of data in relation to a given computer organization.

The term "gateway" is to be understood as the limit of a device e.g. a service platform against other devices. In a simple form the gateway is only a connection between the devices creating a possibility of communication between the devices.

The term "computer structure" is to be understood as a number of computers or parts of one or more computers connected to each other which creates a pool of computers. The computers or parts of one or more computers may physically be placed close together or far apart which means that e.g. a satisfying telephone connection allows for location anywhere in the world.

Due to the location-independent nature of the service platform implementation, equipment can be added and removed from the computers or parts of one or more computers serving user requests without affecting the availability of services.

Maintenance can be performed when the equipment is not busy serving requests and may subsequently be reinstalled in the computers or parts of one or more computers.

At the same time, the nature of the computer structure means that parts of the service platform may be outsourced to other suppliers.

When, as stated in claim 2, at least one of said communication networks is a mobile communication network for mobile communication devices, at least one of said mobile communication devices having a dedicated identification characteristic, it is possible to create records in a database on each of the mobile communication devices with the identification characteristic as the link between a record and a mobile communication device. At the same time, the communication network always forwards the dedicated identification characteristic of the mobile communication device to the database which makes it possible to identify and activate the right record. It is hereby not necessary for the user of the mobile communication device to type personal identification information if the mobile communication device already has a record thereof in the database.

When, as stated in claim 3, said service platform (SP) is a message service platform, it is possible to address most of the present communication networks using message communication.

The term "message" and "message communication" may be understood as data packet communication where the sender of the message has knowledge about the destination of the message e.g. an address of the destination or an address of an operator which knows the address of the destination. The message may be a clearly defined message, such as a SMS message or a number of SMS messages being linked to each other, or a less defined stream/flow of data which comprises a message to one destination.

When, as stated in claim 4, at least one of said operator gateways is a message service centre (MSC), it will be possible to use the service platform in connection with any SMS system.

A "message service centre (MSC)" is a well-known technical term within the communication area.

When, as stated in claim 5, said platform is connected to at least one application, it is possible to create a comprehensive turnkey platform solution. The operators of the communication networks may easily make a connection to the service platform because of the transformation means. By means of at least one application, the platform will offer value at once to the mobile communication devices using the communication networks.

The provider of the service platform further has the advantage that a new application may automatically communicate with all the connected communication networks at once because it is independent of the formats outside the service platform.

The applications may be a variety of services comprising information, entertainment or similar content. Examples of applications are date services, games, news and chat services etc.

In an embodiment of the invention, the operators may adapt the service platform applications according to their personal needs and wishes.

When, as stated in claim 6, said at least one application is at least one internal application (IA1, IA2, IA3) on the platform and is adapted to said associated general format (GF), it is possible to communicate internally on the platform with no communication delays or losses due to transformation between formats. Transformation of communication will only take place at the entry and exit points of the platform.

When, as stated in claim 7, said at least one application is at least one external application (EA1, EA2, EA3) having associated external application formats (EAF1, EAF2, EAF3) and when said platform comprises at least one external application gateway adapted for transforming said external application format (EAF1, EAF2, EAF3) into said general format (GF) and/or for transforming said general format (GF) into said external application format (EAF1, EAF2, EAF3), it is possible to create a gateway between a number of communication devices and external (and internal) applications. Because of the transformation means transforming the external application format into a general format of the service platform, the communication devices will never sense or realise that they are using external as well as internal applications on the service platform. The service platform may offer a comprehensive number of applications without creating all application inside the platform.

At the same time the providers of external applications gain the possibility of creating applications without having to consider the formats, structure or general technical characteristics of the operator gateways. The providers may concentrate on their skills and competences

When, as stated in claim 8, said at least one computer structure (6) further includes a service platform supervision device (SPSD) supervising communication between said service platform gateways and operator gateways or external applications, it is possible to supervise all functions of the service platform and the devices, gateways etc., with which the platform interacts.

Hereby, it is possible to enhance the stability and reliability of the service platform and the devices, gateways etc., with which the platform interacts.

When, as stated in claim 9, the amount of communication to and/or from a communication device (1a-1c) having a dedicated identification means is registered in a record (12) by said service platform supervision device (SPSD), it is possible to register the use of the service platform by all communication devices.

The term "amount of communication ... is registered" may be understood as a numerical registration e.g. the number of SMS messages, a registration of time or amount over time. By the different ways of registering the amount of communication differentiated billing may be attainable.

When, as stated in claim 10, the registered amount of communication is the number of messages to and/or from a communication device (1a-1c), it is possible to summarise the use of the service platform by a communication device in an easy manner.

The amount or number of messages be registered may in a preferred embodiment of the invention be SMS messages.

If a user of the communication device uses a valued application on the service platform, the registered amount of communication may be increased e.g. by multiplying the amount with a digit.

When, as stated in claim 11, the amount of communication over a predefined period is accumulated in said record, it is possible to use the record for billing and/or statistical purposes.

When, as stated in claim 12, a message including said record is transmitted to an operator of a communication network (2a-2c) used by the communication device (1a-1c) after transformation of the message from said general format (GF) to a operator gateway format (OGWF1, OGWF2, ... OGWFn), the operators of the communication networks may perform the billing and similar actions of the users of the service platform.

If the operators perform the billing of use of the service platform together with other billing, the users only receive one invoice which simplifies the processes and eases processing of e.g. complaints.

The operators also have the opportunity to offer various discounts to the user of the service platform, and thereby the communication networks, in relation to e.g. access to a limited number of defined applications.

When, as stated in claim 13, said record is used for billing and/or statistical purposes at the service platform or at the operator of said communication network (2a-2c) being used by the communication device (1a-1c), it is possible to create administrative tools facilitating administration of the service platform and the use of same.

When, as stated in claim 14, said service platform supervision device (SPSD) further comprises at least one algorithm for surveillance of the functionality of the computer structure (6), it is possible control the traffic load on the service platform. The surveillance further offers the possibility of discovering errors quickly e.g. no traffic on the service platform indicates an error.

When, as stated in claim 15, said service platform supervision device (SPSD) has means for storage or refusal of communication, it is possible to prevent further deterioration of the platform if traffic overloads occur. The supervision device will store or refuse communication which allows the service platform to resume normal operation as soon as the traffic load normalizes. If the communication is stored, it will be possible to send it later in case initial attempts were unsuccessful.

Especially the possibility of storing messages for a short period of time before transmission is advantageous since it allows the traffic load to be more levelled over a period and the users will only feel an insignificant delay in response time.

When, as stated in claim 16, said general format is extended markup language (XML), it is possible to address the Internet with the language of the future and make the service platform future-orientated.

By using XML, increased flexibility has been achieved. Especially the possibility of addressing a wide scope of external application providers in the future is advantageous.

When, as stated in claim 17, said general format is hypertext markup language (HTML), it is possible for the platform to host web interfaces for Internet services directly.

When, as stated in claim 18, said transformation means (TM; TM1, TM2, TM3) is adapted for transforming wireless application protocol (WAP) communication, it is possible to address all users of WAP mobile telephones. WAP is a specification of a set of communication protocols aimed at standardizing the way mobile telephones access the Internet. Because of the different WAP manufacturers and network operators using different technologies to gain access to the Internet, the need for a service platform with transformation means is quite significant.

When, as stated in claim 19, said transformation means (TM; TM1, TM2, TM3) is adapted for transforming short message service (SMS) messages, it is possible to address the most widespread format within mobile communication.

When, as stated in claim 20, said transformation means (TM; TM1, TM2, TM3) is adapted for transforming I-mode communication, it is possible to address a further format within mobile communication. I-mode is the packet-based service for mobile communication devices offered by Japan's NTT DoCoMo. Unlike most of the key players in the wireless arena, I-mode eschews WAP and uses a simplified version of HTML, Compact Wireless Markup Language (CWML) instead of WAP's WML. First introduced in 1999, I-mode was the first smart phone for Web browsing. The I-mode offers color and video over the phones. As of early 2000, I-mode had an estimated 5.6 million users.

Claim 21 describes a telecommunication system comprising at least two communication networks (2a-2c) for communication devices (1a-1c), a service platform comprising at least one computer structure (6) having an associated general format (GF), said computer structure (6) comprising gateway interface means (5a, 5b, 5c) adapted for communicating with at least two communication networks (2a, 2b, 2c) via operator gateways (OGW1, OGW2, OGW3), each operator gateway (OGW1, OGW2, OGW3) having associated operator gateway formats (OGWF1, OGWF2, ... OGWFn), at least two of said operator gateway formats (OGW1, OGW2, OGW3) being mutually different, said service platform (SP) comprising transformation means (TM; TM1, TM2, TM3) adapted for transforming said operator gateway formats (OGWF1, OGWF2, ... OGWFn) into said general format (GF) and/or for transforming said general format (GF) into said operator gateway formats (OGWF1, OGWF2, ... OGWFn), and thereby facilitate communication between operator gateways and service platform gateways.

Hereby, it is possible to create a telecommunication system comprising a number of operator communication networks and a service platform where adding of any new equipment or systems on the part of the operator is not required. In general, the operator may offer the service platform to his customer with little or no initial costs, especially since the operator does not need to establish additional surveillance and operation task.

The communication networks may involve a number of different standards or combinations of standards e.g. GSM, GPRS or UMTS communication networks.

When, as stated in claim 22, said communication network (2a-2c) further comprises at least one message service centre (3a-3c) with connections to said communication network (2a-2c), it is possible to use the telecommunication system and service platform in connection with any variation of the SMS standard.

A telecommunication system and service platform in connection with the SMS standard or other packet-/message-based systems are especially advantageous since billing and supervision of the traffic load on the service platform may be simplified to registration of the number of packets or messages to a given communication device.

When, as stated in claim 23, said communication devices are mobile communication devices (1a-1c), it is possible for operators of communication networks to supply a large number of services to mobile communication devices with a uniform interface. The uniform interface is advantageous in connection with mobile communication devices due to the limitations of especially the keyboards of the devices. The uniformity allows the devices to be adapted to the present interface in a user-friendly manner instead of having to use a number of different interfaces.

When, as stated in claim 24, a method of transforming at least one operator gateway format (OGWF1, OGWF2, ... OGWFn) into a general format (GF) of at least one computer structure (6) and/or for transforming said general format (GF) into said operator gateway formats (OGWF1, OGWF2, ... OGWFn), and thereby facilitate communication between operator gateways and service platform gateways, it is possible to communicate with a number of different types of communication systems with a minimum of effort, especially for the operators of the communication networks.

It is also possible to communicate with several communication systems of the same type but with different equipment from different suppliers using the same data language.

When, as stated in claim 25, a method for facilitating the sale of service available to a user of a service platform (SP) by means of at least one communication device (1a, 1b, 1c), preferable a mobile communication device, comprising accepting a dedicated identification characteristic of a user having a communication device (1a, 1b, 1c), accepting at least one request to the service platform (SP), providing the requested service to the user, and charging at least one account number related to said dedicated identification characteristic, it is possible in an easy way to provide services to a number of communication devices. The communication devices may request the services of the service platform via different operators which means that the service platform has the possibility of addressing more users and hence being more profitable.

The communication device, preferable a mobile communication device, may be a GSM mobile telephone.

When, as stated in claim 26, distributing charging information to the respective operators of the communication devices (1a, 1b, 1c) thereby facilitating that the respective operators may charge the users of the communication devices, it is also possible to charge the users at one or more decentralized levels. When the decentralized levels are the operator levels instead of the service platform level it is possible to charge the use of the service platform together with a general charging of use.

### Figures

The invention will be described in the following with reference to the figures, in which
- fig. 1a: shows the transformation of formats between operators and a service platform in a preferred embodiment of the invention,
- fig. 1b: shows the transformation of formats between operators and a service platform in another embodiment of the invention,
- fig. 2: shows communication and/or transformation of formats between the service platform and internal or external applications,
- fig. 3: shows a telecommunication network with a service platform in a preferred embodiment of the invention, and
- fig. 4: shows the service platform.

### Detailed description

In a preferred embodiment, the invention relates to a service platform to be used in connection with telecommunication network environments. The service platform is capable of receiving requests and supplying value in the form of information or entertainment etc. to a user through e.g. a mobile telephone or a computer with an Internet connection. The request, information or entertainment is transferred to the users in the form of data communication in packages or in a continuous stream. The data may be supplied in a form personalised to the individual user provided that he or she has performed a registration procedure at the service platform, or in a general form.

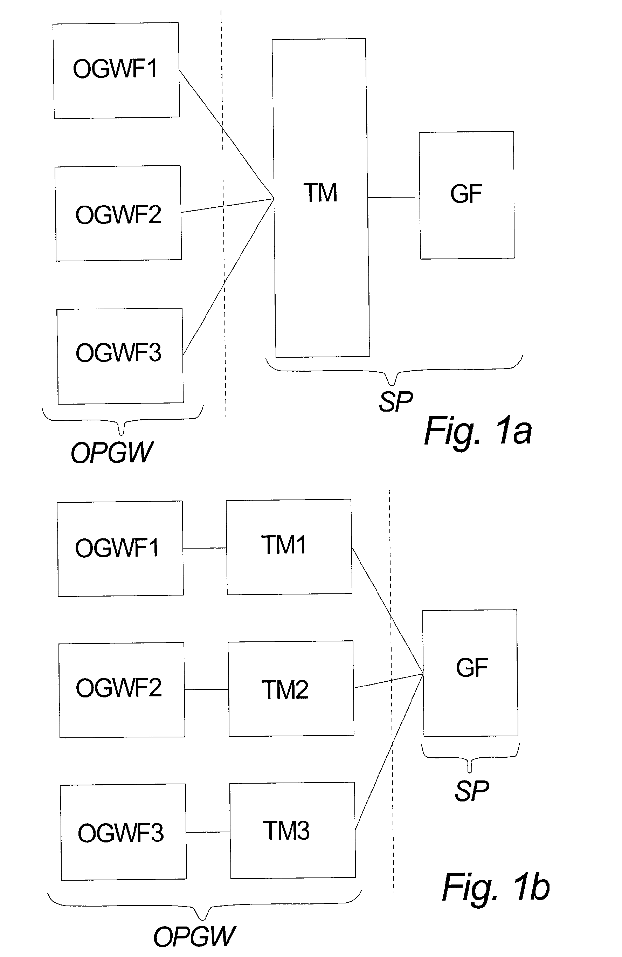

Fig. 1a shows the relation between different formats of the data communication. On the service platform SP, the data communication means has a general format and transformation means TM for transforming the general format before leaving the service platform. The general format may be transformed into number of different operator gateway formats OPGWF1, OPGWF2, OPGWF3 where the operator gateways OPGW1, OPGW2, OPGW3 represent the entries to different communication networks e.g. telecommunication networks. The communication networks all use an operator gateway format for data communication where each format may differ significantly or only slightly from the other operator gateway formats and the general format.

The differences in formats may originate from the use of network equipment from different suppliers or network standards.

Fig. 1b shows another embodiment of the invention where the transformation means TM1, TM2, TM3 are moved from the service platform SP to a position close to the operator gateways OPGW1, OPGW2, OPGW3. Any transformation into and from the general format GF will hereby take placed immediately before entering the operator gateways OPGW1, OPGW2, OPGW3.

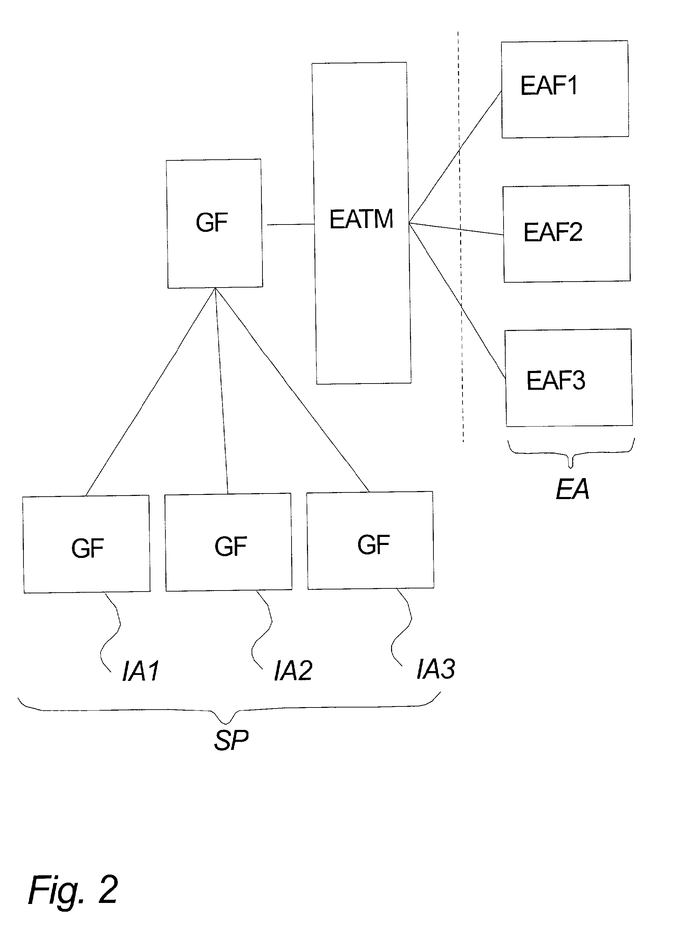

Fig. 2a shows a preferred embodiment of the data communication between the service platform SP and a number of internal applications IA and external applications EA.

On the service platform, internal data communication takes place in the general format GF including the communication between the service platform SP and the internal applications IA.

If the service platform also has connections to external applications EA1, EA2, EA3, the general format is transformed into the formats EAF1, EAF2, EAF3 of the external applications by external application transformation means EATM.

The differences in format of the external applications originate from the use of network equipment from different suppliers or network standards and may be removed by performing the transformation. The users of the service platform may hereby access the internal and external applications without experiencing any differences in functionality.

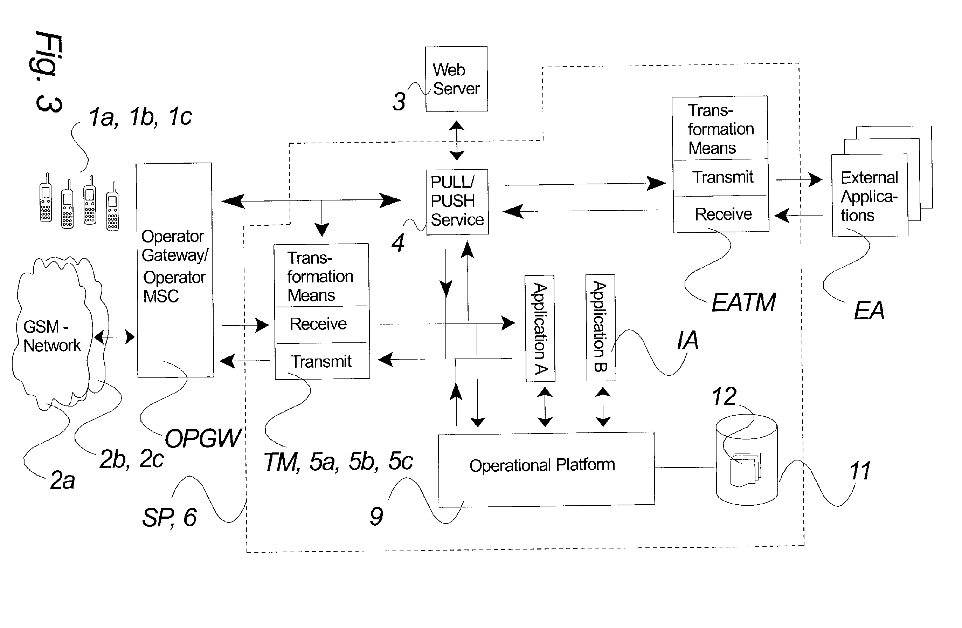

Fig. 3 shows a preferred embodiment of a telecommunication system with a service platform according to the invention.

The telecommunication system includes a number of communication devices 1a-1c such as mobile telephones using one or more communication network 2a-2c and an operator gateway OPGW for communication with a service platform SP. The operator gateway OPGW may be a part of an operator message service centre MSC.

The telecommunication system may further include a number of external applications EA comprising different services.

The service platform SP comprises a computer structure 6 with a number of components. Some of the components are the transformation means TM and external application transformation means EATM which establish interfaces against the world outside the platform such as a number of communication networks 2a-2c through the operator gateways and external applications EA through external application gateways.

The service platform SP also comprises an operational platform 9 containing different administrative tools together with user records 12 such as billing and permission records. The records are stored in a database 11 connected to the operational platform 9.

The service platform SP moreover comprises a number of internal applications IA that may be different services such as date services, games, news and chat services etc.

The service platform further comprises a push/pull service which handles the transmission of data communication to the service platform SP e.g. from a communication device 1a-1c, requesting an internal or external application, or an external application EA, answering a request from the service platform SP. It also handles data communication internally on the service platform SP and data communication to be passed on to a communication device 1a-1c, such as content from an internal application, or data communication to be passed on to an external application.

The administrative tools and user records allows the operator of the service platform to control the data communication to and from the service platform e.g. to a communication device 1a-1c.

The service platform may also have a gateway to a web server and the Internet. Among other things this allows transmission of data communication to one or more Internet servers from the service platform.

Different communication network suppliers do not necessarily use the same type of equipment or the same supplier of equipment to offer their services on a given type of communication network such as GSM. This has the effect that the requests from the users through a communication network do not necessarily arrive at the service platform in the exact same format as requests from other users using another supplier's communication networks.

The presence of different generations of communication network systems also means that the format of e.g. a WAP message is different from the format of an SMS message.

To overcome differences in data communication formats outside the service platform SP the transformation means TM and external application transformation means EATM of the service platform transforms all outside formats, such as the operator gateway formats of the communication networks, to a general format GF used inside the service platform.

The general format GF is used to communicate between all the components on the service platform SP allowing the different components to communicate directly.

The transformation from outside formats to the general format is performed by a number of "intelligent" filters which have the same common part and each an individual customized part. The common part of the filters may transform most of the content in the different data communication formats. To transform the rest of the content in a given data communication format the filter uses the customized part which is dedicated to this particular format. All the formats in question have the same customized part, which together with the common part of the "intelligent" filters allow all the formats to be transformed to the general format.

The customized part of the "intelligent" filter has a number of adaptations "buttons" allowing the customizing of the filter to a given format. If a new format requires further possibility of adaptation it is possible to add another "button". The "button" will be added to all the customized parts of the "intelligent" filter but in a neutral position. The "button" in the new customized part allows adaptation to the new format.

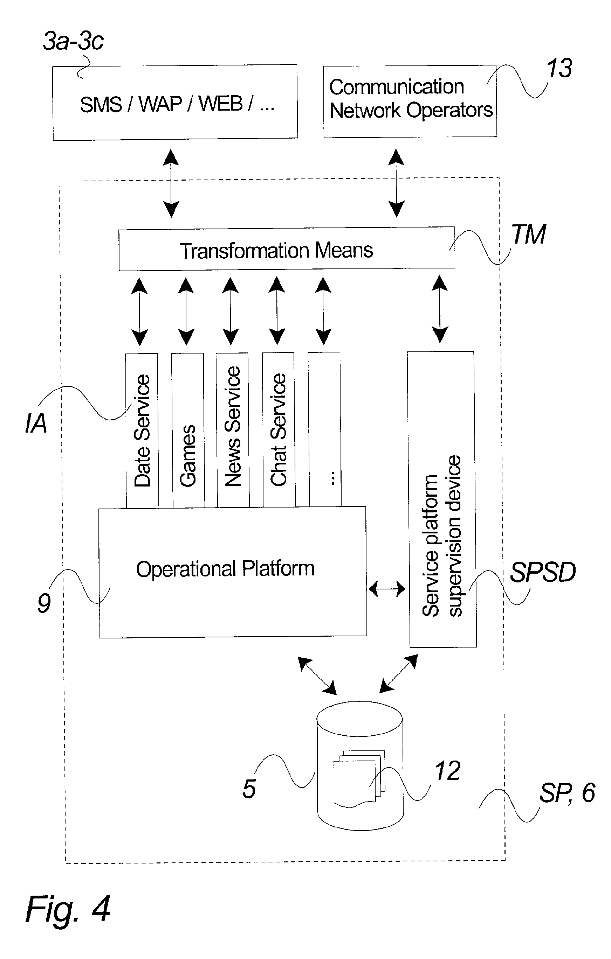

Fig. 4 shows the service platform SP in a more schematic form.

The service platform SP comprises a service platform supervision device SPSD which among other things has means for storage of communication in the database 5 or even refusal of communication. The supervision device makes it possible to prevent further deterioration of the platform if traffic overloads occur. The supervision device will store or refuse communication which allows the service platform to resume normal operation as soon as the traffic load normalizes. If the communication is stored, it will be possible to send it later in case initial attempts were unsuccessful.

The figure also shows that communication network operators 13 may access the service platform SP and adapt e.g. the service platform applications according to their personal needs and wishes. An operator 13 may also gain access to the records concerning the users of his communication network together with other information and services.

### The Service Platform

The following text describes a preferred practical embodiment of a service platform according to the invention.

The following proposed hardware and software manufactures and equipment are optional and may trivially be substituted by other equivalent hardware or software manufactures and equipment.

Hardware Components and Architecture. Incoming HTTP traffic is diverted to either of two Sun Enterprise 420 servers by two Alteon HTTP load-balancing web-switches. These are protected by the fault-tolerance protocol VRRP. Each server is identically equipped with two UltraSPARC-II 450 MHz processors (expandable up to 4) and 2 GB RAM (expandable up to 4 GB). Each server uses two mirrored 18 GB disks to host the operating system and basic operational software. An additional two Sun Enterprise 420 servers are used to host the back-end functionality of the Service Platform.

These are connected to a Sun Enterprise 5500 database server equipped with four 400 MHz UltraSPARC CPUs (expandable up to 14) and 4 GB RAM (expandable up to 14 GB). Two external disk arrays running RAID 0 (striping) and 1 (mirroring), each with a capacity of 90 GB, are used for fast and safe data storage. Data mirroring between the two RAID arrays is also in use to maximize data protection.

This distributed architecture is easily extendable as servers can be added to scale with growing capacity demands.

In case of complete system failure of the database server, any of the other available servers can be instantly deployed and take over the operation until repairs are completed. It should be noted that all servers are hot swappable and dual hardware configured, allowing for replacement of CPUs, memory, disk and other hardware components while in operation.

The physical LAN is Fast Ethernet with a maximum capacity of 100 Mbit/s. Internet connectivity is achieved by a direct backbone connection of 34 Mbit/s.

All traffic is IP-based, and X.25 is primarily offered as X.25 over IP. Physical X.25 is also offered, but is not a recommended solution due to the properties and limitations of true X.25 connections.

The security of the system is established with the use of a Nokia Firewall-1 which protects the environment from unauthorized access. It is recommended that a hardware-based Virtual Private Network (VPN) connection be established for communications between the service platform and the operator's network.

Power Outage Handling is established by multiple uninterruptible power supplies ensuring that the system remains unaffected by power outages of a short duration. A powerful diesel generator instantly powers up upon power outage, allowing service availability to be at full capacity for the entire duration of the power-out.

In the Operating Environment, all servers use the Sun Solaris 8 operating system and Oracle 8i Enterprise Edition is used as the database manager.

Mirrored installations of the Apache web server handle incoming HTTP requests from either the Value Added Service Platform (VASP) for SMS and Internet traffic or WAP gateway for WAP traffic. WAP connection and services are optional.

The interface between the VASP and the Service Platform Servers is the HTTP protocol using TCP/IP networking, which is the standard used in all major VASPs.

The interface between the WAP gateway and the Service Platform Servers is the HTTP protocol using TCP/IP networking.

The service platform offers to implement and host the VASP in order to provide the two communication interfaces to the Service Platform. In this case the communication is established between VASP and the operators SMSC. The operators SMSC must be able to handle 8-bit communications. If the operator uses its own VASP, then it too must be able to handle 8-bit SMS communications.

The Service Platform VASP supports the following major SMSC interfaces:
CIMD2 (Nokia)
UCP aka EMI (CMG)
SMPP (Aldiscon)
HTTP

Communication between Service Platform Servers or VASP and the operator's environment is all done via TCP/IP or X.25 networking.

The direction of the message path is unidirectional from the SMSC and the application. The application monitors the traffic constantly and processes all messages that are directed to it.

The VASP is responsible for forwarding the message, according to the given keyword in the SMS, to the appropriate application hosted on a Service Platform Server.

| Component | Supported Standards |
|---|---|
| VASP | Any HTTP-capable platform, e.g. Netgate (Nokia) and CMG-VASP (CMG). |
| SMSC | CIMD (Nokia), UCP or EMI (CMG), SMPP (Aldiscon) |
| Connection | TCP/IP |

The Service Platform does not require adding of any new system or equipment on the part of the operator.

The horizontal services comprised in The Horizontal Service Platform are implemented as CORBA (Common Object Request Broker Architecture) services that handle authentication, session management, permissions, billing, scheduling, content management and other back-end functionality for hosted vertical services such as the Service Platform Provider Mobile Multimedia Platform.

Through the language and location independent CORBA implementation, scalability is reduced to a simple matter of installed hardware capacity. CORBA naming and directory services ensure service availability in case of failure. The entire platform has been designed to have no single point of failure.

Each CORBA service uses caching techniques to reduce network traffic and database lookups, further decreasing the response times for served requests. Special session handling mechanisms are used to ensure correct redirection of incoming requests.

The implementation language of the Service Platform is Java using the Sun Java SDK 1.3. It should be noted that the CORBA implementation allows modules to be replaced by faster C++ implementations should any bottlenecks be identified in the future.

Both time and event triggered transmission of SMS push messages to the operators SMSC is supported. Message queuing and validity periods are also supported.

Transmission to distribution lists and multiple recipients is supported. The maximum number of messages transmitted in a given time interval to a single subscriber can be restricted. Users can be blocked from using specific services.

Automatic content import from and export to XML is supported, including bulk processing of large data volumes. Users are automatically added to the database upon first use of a service, removing the need for user database synchronization between Service Platform and the operator.

MSISDNs (Mobile Subscriber ISDN) are verified as belonging to the operator using number series or database lookups from imported lists of customers in XML format. For performance reasons, it is recommended to use number series solution if possible.

Integration with IVR (Interactive Voice Response) solutions is also supported using standard XML over HTTP communications protocols. A registration procedure for end-users can also be supplied for use with the IVR solution.

The Vertical Service Platform comprises a Mobile Multimedia Platform and Service Platform Web Services.

The Mobile Multimedia Platform is implemented as Java Servlets using the Sun Java JDK 1.3, Java Servlet Development Kit 2.0 and Java Server Pages 1.1.

Replies are served in XML and formatted to the desired target or terminal before transmission to the end user.

The Internet Portal is implemented using Macromedia Shockwave and Flash in order to provide a modern and appealing interface to the target customers. The web components receive and format the XML replies directly on the client machine. This solution allows end-users to play ringing tones directly from the web interface without downloading any additional files or players.

Extensibility in respect to new terminals (handsets) is achieved by storing multiple ringing tone data formats in the database. Support for new terminals can be added to the solution without restarting or interrupting the service.

Ringing tones and user accounts can be imported from XML files (batch processing). A content handler is available to monitor for the presence of files to import, or to be run at specified intervals. Content added by batch processing is automatically published to remove the need for content screening activity. The Service Platform provider may preferably add new themes (categories) but also the operators may obtain the ability of adding new themes.

Cancelling of a subscription will disable an account, although no account data will be physically removed from the database. This is required to maintain database integrity with respect to billing records and other statistical information.

Customer care and O&M facilities are provided to the operator through the Service Platform Web Services provided by the Service Platform Provider to all operators. An advanced security model is used to prevent unauthorized personnel from accessing sensitive operational data.

This includes interactive web access to the end-user database and customer profiles, service configuration and monitoring, usage statistical and operational performance and availability data. The presentation of such data is made in a formatted and easy to digest layout.

The Service Platform provider also provides an interactive web-based support system as part of the Service Platform Provider Web Services allowing operators instant access to maintenance status information and electronic malfunction reporting. This service is offered as an extension to the 24/7 hotline service.

The Service Platform Provider may outsource the front-end of the IVR solution, allowing the supplied capacity for concurrent calls to be tailored to the requirements of the operator, with only the back-end services and functionality hosted by the Service Platform.

Testing, Monitoring and Supervision of the service platform. A separate environment is in place for performing internal acceptance and quality assurance testing, ensuring that the production environment is not used for testing the performance or quality of developed services.

Several mechanisms are used to alert the Service Platform Provider in case of system failure. If there is no traffic for a configurable amount of time, an alert is sent by SMS and available via web. Similar alerts are also sent for services not answering to requests, as well hardware equipment not answering to Ping requests.

The servers are monitored on a 24x7 schedule. In the event failure is detected, the provider support staff is notified and troubleshooting commences immediately. In the event the support staff detects a failure at the operator (*i.e*. if a router is not responding), the support staff will promptly contact the operator in order to facilitate a quick reestablishment of the service.

### Application services

The following text describes examples of preferred embodiments of application services.

An example of an application service on the entertainment platform is the global chat. The global chat is a chat and community concept that combines 3 media: The mobile telephone, the display opportunity such as a teletext page, and the Internet. The global chat is a multi-user on-line environment that allows participants to act and communicate in a common virtual universe. It is a concept that facilitates social interaction among participants.

To participate in the chat, the customer must first register his profile in the record dedicated to his telephone number of the mobile telephone. Once registered, the customer can start to chat and create relations with other people.

The customer uses the mobile telephone to transmit messages - either to another mobile telephone, to a teletext page or an Internet page. Other customers can then read the message and respond by transmitting new messages.

Another example is a dating concept. The dating concept for the mobile telephone is built on the principles of a blind date, chat and elements from the question game "Truth or Dare". The concept helps users to find dates by matching their record profiles and their answers to given questions. The results are used to subsequently match users to each other in the best possible combinations.

The dating concept makes it possible for customers to communicate with their dates via the mobile telephone and remain anonymous while doing so. The concept can work either as an add-on to the global chat or as a stand-alone application.

To participate in the dating game, the customer needs to register his profile only once. As soon as he has registered, he can enter the world of dating and communicate under his nickname.

A third example of a service is Fraggi. Fraggi is a virtual pet designed for the mobile telephone. Fraggi is the mobile tamagotchi that will entertain the mobile telephone users.

As with all other pets, Fraggi has needs and desires that must be satisfied by its master - the mobile telephone customer. The customer must periodically care for the "pet", with choices of food, discipline, and other factors influencing his healthy development. The average life span is 7-12 days, but negligence will result in premature virtual "death".

The customer uses the mobile telephone to transmit short messages - to respond to and stimulate Fraggi. Fraggi's mood, age and personality will decide whether the stimulus is positive or negative to his development. The challenge for the customer is to try to get to know his personal Fraggi in order to stimulate him in the right way and keep him alive and healthy for as long as possible.

Fraggi starts by the customer hatching out his own Fraggi as desired.
The customer can stimulate Fraggi by means of 40 different parameters in 8 categories such as food, sports, education, entertainment etc.

Fraggi is proactive and "talks" to his master on a regular basis in response to information stored in the customer's file or according to time counters. The counters are started by the customer's last stimulation of Fraggi or by general parameters for the ageing of Fraggi. The customer can respond to Fraggi's proactive communication by transmitting a message. The service also includes hidden and surprising functionalities such as Fraggi at night (Fraggi changes personality to a kind of monster at night-time if disturbed), Dr. Zing (the doctor which cures Fraggi when he gets ill) etc.

Many other kinds of services are possible with the use of the customer record. More primitive ones are services, which correspond to the already known message services but with a high degree of user friendliness. An example is the horoscope service where the customer only needs to type the command for the horoscope service. Because of the customers record, the entertainment platform already knows the birthday and the telephone number to which the horoscope should be transmitted.

It is also possible to use different kinds of game services such as quizzes where the winner's nickname and the winner's prize can be published on the different displays i.e. on the teletext page. The winner can also be informed of the result of the game and how or where to collect the prize etc. by receiving an SMS message.

Customers also have the possibility of advancing in a social hierarchy and thereby acquire certain privileges.

One example of this is to provide customers who are frequent users of the services on the entertainment platform with the opportunity to have messages publicised on the displays in graphic style, which differs from the style of more ordinary customers, i.e. in a different colour. Honorary titles are also a possibility for the customer who has won a certain service on more occasions than other customers within a certain period of time.

Common to these possibilities is the fact that they are based on the customer's record. The record contains information about the customer's use of the services on the entertainment platform and results of such use, as well as personal information.

### List

- EA: External applications
- EATM: External applications transformation means
- GF: General format
- IA: Internal applications
- MSC: Message service centre
- OPGW1...: Operator gateways
- OPGWF1 ...: Operator gateway format
- SP: Service platform
- SPSD: Service platform supervision device
- TM: Transformation means
- TM1-TM3: Transformation means
- 1a, 1b, 1c.: Communication devices such as mobile telephones
- 2a, 2b, 2c.: Communication network for communication devices 1a-1c
- 3.: Web server
- 4.: Push/pull service
- 5a-5c.: Transformation means
- 6.: Computer structure
- 9.: Operational platform
- 11.: Database
- 12.: Record
- 13.: Communication network operators

## Claims

1. Service platform (SP) for operating in telecommunication networks, said service platform (SP) comprising
at least one computer structure (6) having an associated general format (GF), said computer structure (6) comprising gateway interface means (5a, 5b, 5c) adapted for communicating with at least two communication networks (2a, 2b, 2c) via operator gateways (OGW1, OGW2, OGW3), each operator gateway (OGW1, OGW2, OGW3) having associated operator gateway formats (OGWF1, OGWF2, ... OGWFn), at least two of said operator gateway formats (OGW1, OGW2, OGW3) being mutually different,
said service platform (SP) comprising transformation means (TM; TM1, TM2, TM3) adapted for transforming said operator gateway formats (OGWF1, OGWF2, ... OGWFn) into said general format (GF) and/or for transforming said general format (GF) into said operator gateway formats (OGWF1, OGWF2, ... OGWFn), and thereby facilitate communication between operator gateways and service platform gateways.

2. Service platform (SP) according to claim 1 wherein at least one of said communication networks is a mobile communication network for mobile communication devices, at least one of said mobile communication devices having a dedicated identification characteristic.

3. Service platform (SP) according to claim 1 or 2 wherein said service platform (SP) is a message service platform.

4. Service platform (SP) according to any of the claims 1 to 3 wherein at least one of said operator gateways is a message service centre (MSC).

5. Service platform (SP) according to any of claims 1 to 4 wherein said platform is connected to at least one application.

6. Service platform (SP) according to claim 5 wherein said at least one application is at least one internal application (IA1, IA2, IA3) on the platform and is adapted to said associated general format (GF).

7. Service platform (SP) according to claim 5 wherein said at least one application is at least one external application (EA1, EA2, EA3) having associated external application formats (EAF1, EAF2, EAF3) and where said platform comprises at least one external application gateway adapted for transforming said external application format (EAF1, EAF2, EAF3) into said general format (GF) and/or for transforming said general format (GF) into said external application format (EAF1, EAF2, EAF3).

8. Service platform (SP) according to any of claims 1 to 7 wherein said at least one computer structure (6) further includes a service platform supervision device (SPSD) supervising communication between said service platform gateways and the operator gateways (OPGW) or external applications (EA).

9. Service platform (SP) according to claim 8 wherein the amount of communication to and/or from a communication device (1a-1c), having a dedicated identification means is registered in a record (12) by said service platform supervision device (SPSD).

10. Service platform (SP) according to claim 8 or 9 wherein the registered amount of communication is the number of messages to and/or from a communication device (1a-1c).

11. Service platform (SP) according to claim 9 or 10 wherein the amount of communication over a predefined period is accumulated in said record (12).

12. Service platform (SP) according to any of claims 9 to 11 wherein a message including said record is transmitted to an operator of a communication network (2a-2c) used by the communication device (1a-1c) after transformation of the message from said general format (GF) into a operator gateway format (OGWF1, OGWF2, ... OGWFn).

13. Service platform (SP) according to any of claims 9 to 12 wherein said record is used for billing and/or statistical purposes at the service platform or at the operator of said communication network (2a-2c) used by the communication device (1a-1c).

14. Service platform (SP) according to claim 8 wherein said service platform supervision device (SPSD) further comprises at least one algorithm for surveillance of the functionality of the computer structure (6).

15. Service platform (SP) according to claim 14 wherein said service platform supervision device (SPSD) has means for storage or refusal of communication.

16. Service platform (SP) according to any of claims 1 to 13 wherein said general format is extended markup language (XML).

17. Service platform (SP) according to any of claims 1 to 13 wherein said general format is hypertext markup language (HTML).

18. Service platform (SP) according to any of claims 1 to 15 wherein said transformation means (TM; TM1, TM2, TM3) is adapted for transforming wireless application protocol (WAP) communication.

19. Service platform (SP) according to any of claims 1 to 15 wherein said transformation means (TM; TM1, TM2, TM3) is adapted for transforming short message service (SMS) messages.

20. Service platform (SP) according to any of claims 1 to 15 wherein said transformation means (TM; TM1, TM2, TM3) is adapted for transforming I-mode communication.

21. Telecommunication system comprising a
at least two communication networks (2a-2c) for communication devices (1a-1c),
a service platform comprising at least one computer structure (6) having an associated general format (GF), said computer structure (6) comprising gateway interface means (5a, 5b, 5c) adapted for communicating with at least two communication networks (2a, 2b, 2c) via operator gateways (OGW1, OGW2, OGW3), each operator gateway (OGW1, OGW2, OGW3) having associated operator gateway formats (OGWF1, OGWF2, ... OGWFn), at least two of said operator gateway formats (OGW1, OGW2, OGW3) being mutually different,
said service platform (SP) comprising transformation means (TM; TM1, TM2, TM3) adapted for transforming said operator gateway formats (OGWF1, OGWF2, ... OGWFn) into said general format (GF) and/or for transforming said general format (GF) into said operator gateway formats (OGWF1, OGWF2, ... OGWFn), and thereby facilitate communication between operator gateways and service platform gateways.

22. Telecommunication system according to claim 21 wherein said communication network (2a-2c) further comprises at least one message service centre (3a-3c) with connections to said communication network (2a-2c).

23. Telecommunication system according to claim 21 or 22 wherein said communication devices are mobile communication devices (1a-1c).

24. Method of transforming at least one operator gateway format (OGWF1, OGWF2, ... OGWFn) into a general format (GF) of at least one computer structure (6) and/or for transforming said general format (GF) into said operator gateway formats (OGWF1, OGWF2, ... OGWFn), and thereby facilitate communication between operator gateways and service platform gateways.

25. Method for facilitating the sale of service available to a user of a service platform (SP) by means of at least one communication device (1a, 1b, 1c), preferable a mobile communication device, comprising
accepting a dedicated identification characteristic of a user having a communication device (1a, 1b, 1c),
accepting at least one request to the service platform (SP),
providing the requested service to the user, and
charging at least one account number related to said dedicated identification characteristic.

26. Method for facilitating the sale of service according to claim 25 wherein distributing charging information to the respective operators of the communication devices (1a, 1b, 1c) thereby facilitating that the respective operators may charge the users of the communication devices.

27. Use of a service platform according to claims 1 to 20, a telecommunication system according to claims 21 to 23 and method according to claims 24 to 26 in connection with SMS communication network systems.

28. Use of a service platform according to claims 1 to 20, a telecommunication system according to claims 21 to 23 and method according to claims 24 to 26 in connection with one or more external applications (EA1, EA2, EA3) where communication from said one or more external applications (EA1, EA2, EA3) is transformed by transformation means (TM; TM1, TM2, TM3) into said general format (GF).
